# EUROPÄISCHE PATENTSCHRIFT

(11) **EP 2 096 973 B1**
(45) Veröffentlichungstag und Bekanntmachung des Hinweises auf die Patenterteilung: **05.03.2014**
(21) Anmeldenummer: 07866237.6
(22) Anmeldetag: 13.12.2007
(51) Int. Cl.: A47L 9/24

(54) **TELESKOPIERBARE ROHRVERBINDUNG FÜR STAUBSAUGER-SAUGROHRE ODER STATIVE**
TELESCOPIC TUBE CONNECTOR FOR VACUUM CLEANER SUCTION TUBES OR STANDS
RACCORD DE TUYAU TÉLESCOPIQUE POUR TUYAUX D'ASPIRATION OU MANCHES D'ASPIRATEURS

(30) Priorität: 21.12.2006 DE 102006061520
(43) Veröffentlichungstag der Anmeldung: 09.09.2009
(73) Patentinhaber: Fischer Rohrtechnik GmbH, 77855 Achern-Fautenbach (DE)
(72) Erfinder: CORDES, Martin, 59846 Sundern (DE); CORDES, Stephan, 59821 Arnsberg (DE); SCHMIDT, Helmut, 33154 Salzkotten (DE)
(74) Vertreter: Gesthuysen Patent- und Rechtsanwälte
(86) Internationale Anmeldenummer: PCT/EP2007/010950
(87) Internationale Veröffentlichungsnummer: WO 2008/077498

(56) Entgegenhaltungen:
- EP-A- 1 380 247
- WO-A-2004/049891
- DE-B1- 2 260 816
- DE-U1-202004 000 425
- DE-U1-202005 019 290
- DE-U1-202005 020 121
- DE-U1-202006 019 588
- US-A- 5 836 620

## Beschreibung

Die Erfindung betrifft eine teleskopierbare Rohrverbindung für Staubsauger-Saugrohre oder Stative mit mindestens einem Außenrohr und mit mindestens einem Innenrohr mit Rastvertiefungen in welche ein das Außenrohr kuppelndes sowie über einen daran befestigten manuell betätigbaren Schieber sperrbares oder entsperrbares Rastelement durch eine Öffnung im Außenrohr eingreift.

Bei einer teleskopierbaren Rohrverbindung für Staubsauger-Saugrohre gemäß der DE 195 28 814 C1 und der DE 195 47 722 C1 besteht das Rastelement aus zwei unter einem entgegengesetzten spitzen Winkel gegenüber der Längsachse des Außenrohre auf einer schiefen Gleitebene eines in einer Ausnehmung des Außenrohres formschlüssig eingefügten Führungskörpers verschiebbaren, in getrennte Rastvertiefungen eingreifenden Klemmkörpern, von denen der die jeweilige Relativbewegung von Innen- zu Außenrohr sperrende Klemmkörper oder zur Lösung dieser Sperrposition über den linear bewegbaren Schieber aus seiner Rastvertiefung heraus entlang seiner schiefen Gleitebene verschiebbar ist. Beide Klemmkörper stehen unter Wirkung einer Feder, die bestrebt ist, beide Klemmkörper in ihrer Verriegelungsposition zu halten. Die Rastvertiefungen bestehen aus auf der Außenumfangsfläche quer zur Längsachse des Rohres verlaufenden Kanälen, mit kalottenartigem Querschnitt, in welchen die entsprechend abgerundeten Klemmkörper eingreifen. Diese teleskopierbare Rohrverbindung hat sich bei Staubsauger-Saugrohren vielfach bewährt. Um eine solche teleskopierbare Rohrverbindung nicht nur für Staubsauger, sondern auch für Stative verwenden zu können, wird einerseits der relativ weite Abstand zwischen den Rastvertiefungen im Innenrohr sowie die Vielzahl der Teile als nachteilig empfunden. Insbesondere durch den relativ großen Abstand zwischen zwei Rastvertiefungen wird der kürzeste Teleskopweg bestimmt.

Daneben gibt es zum Stand der Technik eine Vielzahl von unterschiedlichen teleskopierbaren Rohrverbindungen für Stative, die die Rohre durch federbelastete Raststifte verriegeln, die durch eine Öffnung des Innenrohres in eine Lochreihe des Außenrohres eingreifen. Hier wird der kürzeste Teleskopweg vom Abstand der Öffnungen im Außenrohr bestimmt.

Daneben gibt es noch eine Reihe von teleskopierbaren Rohrverbindungen für Stative, die aus einer kraftschlüssigen Knebelverbindung verriegelt werden. Zu diesem Zweck wird an der jeweiligen stufenlos erreichbaren Position ein Hebel umgelegt, der die im Querschnitt rechteckigen Rohre in ihrer Verriegelungsposition rein kraftschlüssig gegeneinanderpreßt. Diese teleskopierbare Rohrverbindung ist mit dem erheblichen Nachteil verbunden, daß nur solche Kräfte aufnehmbar sind, welche die Klemmkräfte der beiden Rohre nicht übersteigt. Bei an einem oder beiden Enden ausgeübten Impulskräften pflegen diese Rohre ineinanderzugleiten, weil die rein kraftschlüssige Verbindung solche Kräfte nicht halten kann.

Speziell bei Stativen und auch bei Staubsauger-Saugrohren sind daneben Rohrverbindungen bekannt, die zwar stufenlos verstellbar sind, jedoch durch einen Drehschieber in der jeweiligen Position unter Reibungskräften miteinander verklemmt werden sowie ebenfalls bei an einem oder beiden Enden ausgeübten Impulskräften ineinandergleiten, weil auch diese kraftschlüssige Verbindung durch die Klemmkräfte nicht gehalten werden kann.

Schließlich, offenbart die US 5 836 620 eine Rohrverbindung gemäß dem Oberbegriff des Anspruchs 1.

Der vorliegenden Erfindung liegt die Aufgabe zugrunde, eine gattungsgemäße teleskopierbare Rohrverbindung sowohl für Staubsauger-Saugrohre als auch für Stative derart zu verbessern, daß sie eine quasi stufenlose Teleskopierbarkeit der Rohre gewährleistet und bei preiswerter und einfacher Herstellung sowie Montage eine stets sowohl kraftschlüssige als auch formschlüssige Verriegelung der Rohre in ihrer Verriegelungsposition sichergestellt, aus der sie gleichwohl mit einem Handgriff lösbar ist.

Diese Aufgabe wird in Verbindung mit dem eingangs genannten Gattungsbegriff durch eine Rohrverbindung gemäß Anspruch 1. Nunmehr wird der geringste Teleskopweg durch den Abstand zweier Zähne bestimmt, wodurch aufgrund der kleinflächigen Ausbildung dieser Zähne und ihrer entsprechenden Vielzahl eine quasi stufenlose teleskopierbare Rohrverbindung erreicht wird, deren Stufen nunmehr durch die Zahnlücken der relativ kleinen Zähne bestimmt ist. Außerdem besteht diese teleskopierbare Rohrverbindung nur noch aus drei Teilen, nämlich einer Zahnleiste auf dem Außenumfang des Innenrohres, aus der kurzen Zahnstange und dem Drehschieber. Eine Feder, bei der mehrere Klemmelemente auf einer schiefen Ebene verschoben werden müssen, ist entbehrlich. Jedoch wird diese teleskopierbare Rohrverbindung in der Verriegelungsposition nicht nur kraft-, sondern auch formschlüssig miteinander verriegelt, aus welcher sie auch durch impulsartige Kräfte auf die Rohrenden nicht zu lösen ist, weil sämtliche - und nicht etwa nur ein Zahn - der Zahnleiste mit der gleichen Zahl an Gegenzähnen in der Zahnstange die Verriegelungskraft bestimmt. Ihre Montage ist einfach und ihre Herstellung preiswert.

Außerdem erlaubt diese teleskopierbare Rohrverbindung eine Aneinanderreihung von mehreren und nicht nur zwei Rohren, was insbesondere für Stative, aber weniger für Staubsauger-Saugrohre wesentlich ist. Zur Schaffung einer teleskopierbaren Rohrverbindung mit drei Rohren ist beispielsweise vorteilhaft an einem jeweils im Querschnitt erweiterten Endbereich des von dem jeweiligen Außenrohr abgewandten Ende des Innenrohres ein zweiter Drehschieber auf dem nunmehr als Außenrohr wirkenden Innenrohr angeordnet, der mit einem in dieses erste Innenrohr teleskopierenden zweiten Innenrohr mit einer zweiten Zahnleiste und einer zweiten Zahnstange zusammenwirkt. Dadurch verkleinert sich zwar zunehmend vom ersten Außenrohr bis zum letzten Innenrohr der Durchmesser dieser Rohre, die aber selbstverständlich auch größere Belastungen aufnehmen können, weil sie nicht nur rein kraftschlüssig, sondern stets auch formschlüssig in ihrer Verriegelungsposition unverrückbar gehalten werden. Auch optisch ergibt sich ein gefälliges Gesamtbild, weil die Drehschieber und die Rohre zwar nicht in ihren Außendurchmesser aber in ihrer kreisrunden Form übereinstimmen.

Vorteilhaft sind die Zähne in der Zahnleiste und in der Zahnstange gleich groß, wodurch nicht nur eine entsprechend große Klemmfläche, sondern auch ein entsprechend großer formschlüssiger Eingriff erzielt wird.

Dabei weisen die Zähne in der Zahnleiste und in der Zahnstange eine Geradverzahnung auf, wodurch die ineinandergreifenden Zähne einen größtmöglichen Flächenkontakt erreichen. Zur Weiterbildung dieses Zweckes sind die Zähne mit geraden Flanken versehen, die zu einer Horizontalen unter einem Winkel β zwischen 30° und 90°, vorzugsweise zwischen 60° bis 90° verlaufen. Ein Winkel β zwischen 60° und 90° hat sich bei den ersten Versuchsmodellen der teleskopierbare Rohrverbindung bewährt, weil ein solcher Winkel aufgrund seiner Steilheit einerseits einen kurzen Teleskopweg von Zahn zu Zahn ergibt und andererseits auch eine hinreichende Verriegelungskraft bei impulsartig auf die Rohrenden ausgeübten Kräften sicherstellt. Denn die Steilheit des Flankenwinkels β in Verbindung mit der Anzahl der Zähne stimmt bei der erfindungsgemäßen Rohrverbindung den kleinstmöglichen Teleskopweg.

Zur Erreichung einer robusten und einen Verschleiß herabsetzenden Form sind die Zahnflanken am Kopf der Zähne über eine radiale Abrundung oder eine ebene Abflachung miteinander verbunden. Außerdem sind vorteilhaft die Gegenzähne über die Breite der Zahnstange an ihrem freien Ende konvex und die Zahnlücken der Zähne in der Zahnleiste über ihre Breite konkav abgerundet. Dadurch greift die Zahnstange mit einer konvexen Abrundung am Kopf ihrer Gegenzähne in die konkav abgerundeten Zahnlücken der Zähne in der Zahnleiste ein, wodurch ein reibungsarmer Ein- und Ausgriff der Zähne mit den Gegenzähnen sichergestellt ist.

Die Drehschieber weisen vorteilhaft eine zylindrische Außenform auf, die raumsparend das jeweils als Außenrohr wirkende Rohr umgreift.

Nach einer besonders vorteilhaften Weiterbildung der Erfindung ist jeder Drehschieber auf seiner Innenumfangsfläche mit einer Ausnehmung versehen, die der Breite und Länge der darin in der Öffnungsposition der Rohrverbindung hineinragenden Zahnstange entspricht und an mindestens einer Seite der Ausnehmung mit einer sich kontinuierlich verengenden Innenumfangsfläche versehen ist, die bei Erreichung der Verriegelungsposition bei einer Drehung des Drehschiebers die Zahnstange mit ihren Gegenzähnen in die Zahnlücken der Zähne in der Zahnleiste preßt. Da zur Erreichung dieser Preßposition ausgehend von der Öffnungsposition nur ein geringer Winkel von beispielsweise 15° erforderlich ist, kann entsprechend rasch eine Veränderung der Ausziehposition der Teleskoprohre erreicht werden.

Die Zahnstange wird innerhalb des jeweiligen Außenrohres formschlüssig gehaltert. Zu diesem Zweck weist die Zahnstange in senkrechter Positionsansicht eine rechteckige Form auf, die durch eine gleichgroße Öffnung mit Rechteckform des Außenrohres mit geringfügigem Spiel durchgreift.

Nach einer besonders vorteilhaften Weiterbildung der Erfindung sind sämtliche Rohre aus Aluminium hergestellt, während der Drehschieber und die Zahnstange vorteilhaft aus Polyamid bestehen. Aluminium weist gegenüber Edelstahl ein erheblich geringeres Gewicht auf und läßt eine präzise Einprägung selbst von kleinen Zähnen als Zahnleiste ohne weiteres zu, was bei Edelstahl sehr schwierig ist. Zur Herstellung einer präzisen Ausbildung der Zähne auf der Zahnstange erweist sich Polyamid hinsichtlich seiner Abriebfestigkeit am günstigsten. Der Drehschieber mit seinem aufzuklipsenden Stirnring sowie eine Dichtungs- und Führungshülse können auch aus POM oder PE hergestellt werden.

Die Rohre sind vorteilhaft mit einer Wanddicke von 0,8 mm und mit Außendurchmessern zwischen 32 mm und 38 mm versehen.

Ein Ausführungsbeispiele der Erfindung ist in den Zeichnungen dargestellt. Dabei zeigen:
Fig. 1 einen Längsschnitt durch insgesamt drei miteinander teleskopierbaren Rohren in ihrer Verriegelungsposition, bei denen zur besseren Übersicht die Hintergrundlinien fortgelassen wurden, entlang der Linie I/I von Fig. 2,
Fig. 2 die Ansicht in Richtung des Pfeiles II von Fig. 1,
Fig. 3 die Schnittansicht entlang der Linie III/III von Fig. 4 in der Entriegelungsposition der Zahnstangen und der Zahnleisten,
Fig. 4 die Ansicht in Richtung des Pfeiles IV von Fig. 3,
Fig. 5 eine der Fig. 1 entsprechende Ansicht von drei teleskopierbaren Rohren mit sämtlichen Hintergrundlinien in der verriegelten Position der Rohre,
Fig. 6 die Schnittansicht entlang der Linie VI/VI von Fig. 5 in verriegelter Position,
Fig. 7 die Ansicht von Fig. 5 in entriegelter Position der Zahnstangen von den Zahnleisten,
Fig. 8 die Schnittansicht entlang der Linie VIII/VIII von Fig. 7
Fig. 9 die Draufsicht auf das Staubsauger-Saugrohren entlang der Linie IX/IX von Fig. 1,
Fig. 10 die Ausschnittvergrößerung X von Fig. 1,
Fig. 11 die Ausschnittvergrößerung XI von Fig. 3.

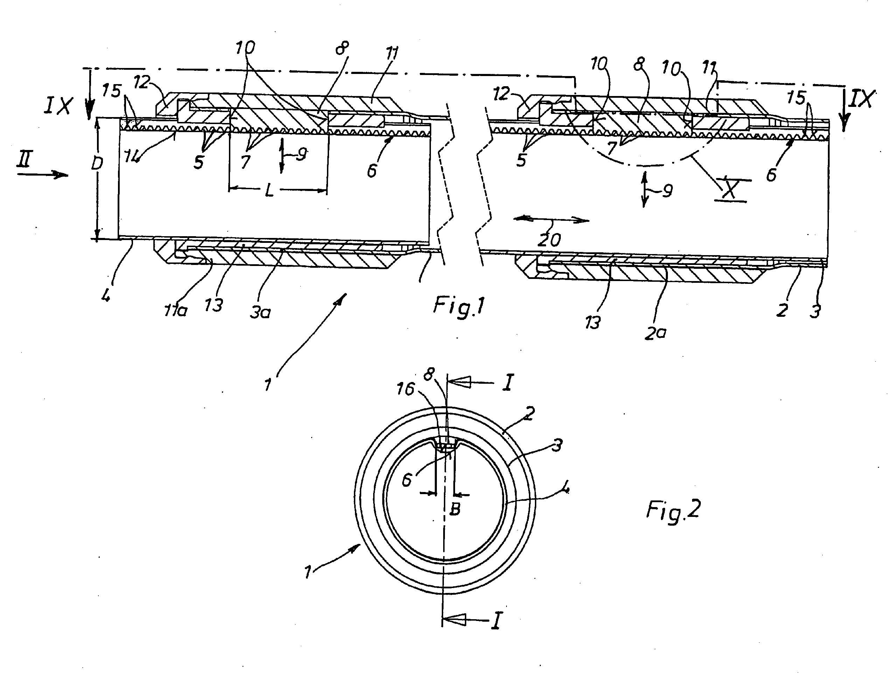

Die teleskopierbare Rohrverbindung 1 gemäß den Figuren 1 bis 4 besteht aus einem Außenrohr 2, einem ersten darin teleskopierbaren Innenrohr 3 und einem zweiten Innenrohr 4, welches in das erste Innenrohr 3 hineinteleskopiert. Bezogen auf das zweite Innenrohr 4 bildet somit das erste Innenrohr 3 ein Außenrohr. Aus diesem Grunde heißt es bewußt bereits im Gattungsbegriff des Anspruchs 1, daß die Rohrverbindung mindestens ein Außenrohr und mindestens ein Innenrohr aufweist. Um jedoch in der nachfolgenden Beschreibung keine Unklarheiten aufkommen zu lassen, werden die Bezeichnungen "Außenrohr 2", "erstes Innenrohr 3" und "zweites Innenrohr 4" beibehalten werden.

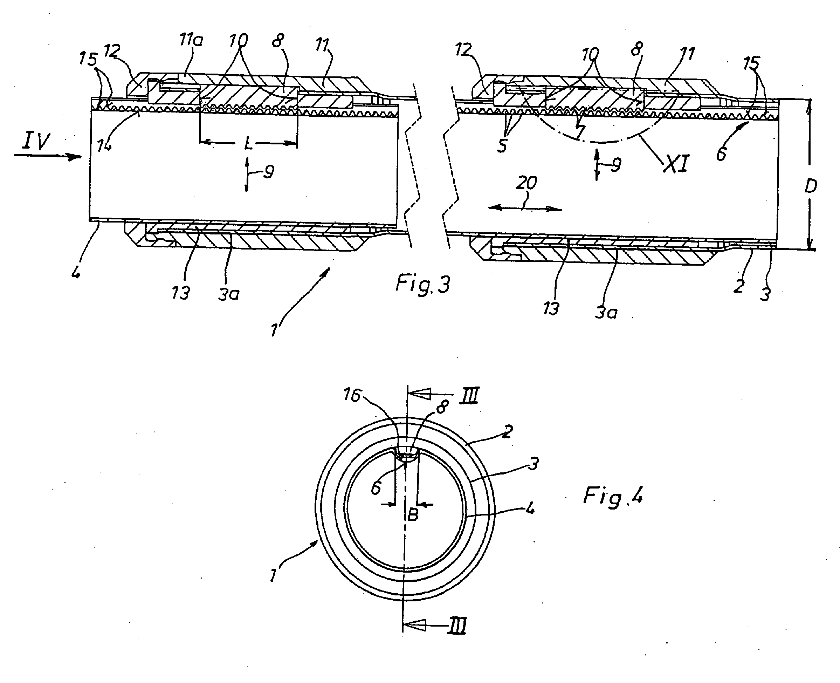

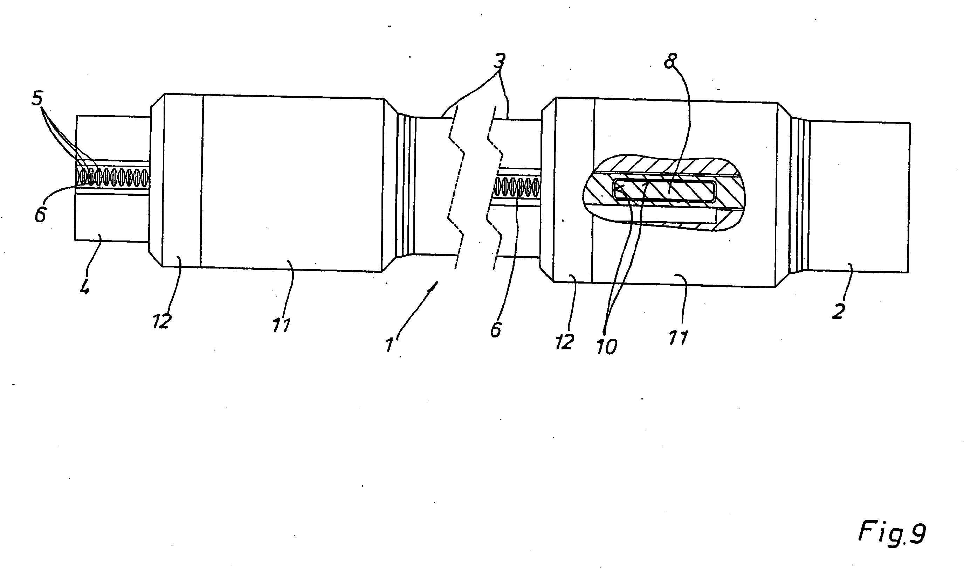

Das erste Innenrohr 3 und das zweite Innenrohr 4 sind an ihrer Außenumfangsfläche mit einer Vielzahl von Zähnen 5 in Form einer ein- bzw. aufgeprägten Zahnleiste 6 versehen. Die Zahnleiste 6 ist somit stoffschlüssig mit dem jeweiligen Innenrohr verbunden. Die Zahnlücken der Zähne 5 greifen in eine Vielzahl von Gegenzähnen 7, die zu einer kurzen Zahnstange 8 gehören. Diese Zahnstange 8 gemäß den Figuren 1 und 3 ist in Richtung des Doppelpfeiles 9 zur Entriegelung und zur Verriegelung durch eine Öffnung 10 im Außenrohr 2 hindurch verschieblich. Die Außenumfangskonfigurationen der Zahnstange 8 und der Öffnung 10 sind geometrisch ähnlich und weisen ein Spiel auf, so daß sich die Zahnstange 8 verkantungsfrei in der Öffnung 10 verschieben kann (siehe Fig. 9). Wie aus Fig. 9 hervorgeht, sind vorliegend die Außenumfangskonfigurationen der Zahnstange 8 und die Öffnung 10 rechteckig ausgebildet, deren Eckenbereiche leicht abgerundet sind.

Die Zahnstange 8 ist an einem erweiterten Endbereich 2a des Außenrohres 2 angeordnet und wird von dem Drehschieber 11 umgriffen. Am Ende 11a des Drehschiebers 11 wird zum Abschluß ein Stirnring 12 aufgeklipst, der den Drehschieber 11 in seiner bestimmungsgemäßen Drehposition hält. Zwischen der Innenumfangsfläche des erweiterten Endbereiches 2a des Außenrohres 2 und der Außenumfangsfläche des ersten Innenrohres 3 ist eine Dichthülse 13 angeordnet. Diese Dichthülse 13 kann man auch als Führungshülse bezeichnen, weil sie einerseits den Raum zwischen dem Außenumfang des ersten Innenrohres 3 und dem Innenumfang des Außenrohres 2 weitgehend abdichtet, was für die Benutzung dieser teleskopierbaren Rohrverbindung als Staubsauger-Saugrohr wichtig ist. Andererseits fungiert die Dichtungshülse 13 in Bezug auf die Teleskopierbarkeit der beiden Rohre 2, 3 als Führungshülse 13, um das jeweilige Innenrohr 3 oder 4 frei im Außenrohr 2 oder 3 zu führen, was insbesondere für die Verwendung dieser teleskopierbaren Rohrverbindung 1 für Stative wichtig ist.

Ebenso ist in einem erweiterten Bereich 3a des ersten Innenrohres 3 ein weiterer Drehschieber 11 mit einem Stirnring 12 und eine weitere Dichtungs- bzw. Führungshülse 13 angeordnet.

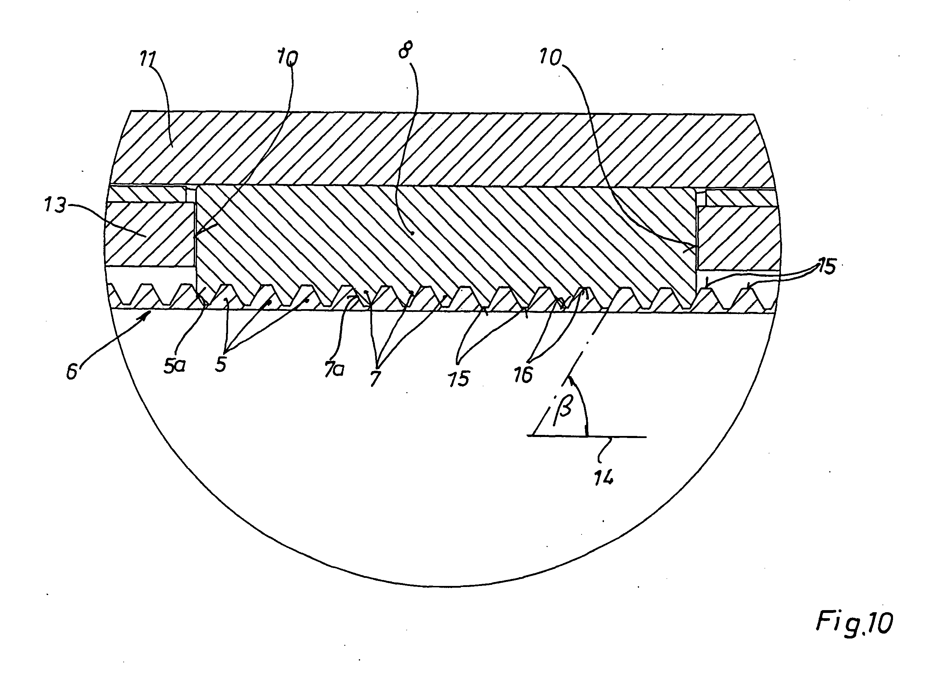

Wie deutlich aus den Figuren 1 und 10 entnehmbar ist, greifen in der darin dargestellten verriegelten Position die Gegenzähne 7 der Zahnstange 8 in die Zahnlücken der Zähne 5 der Zahnleiste 6 der jeweiligen Innenrohres 3 bzw. 4 ein.

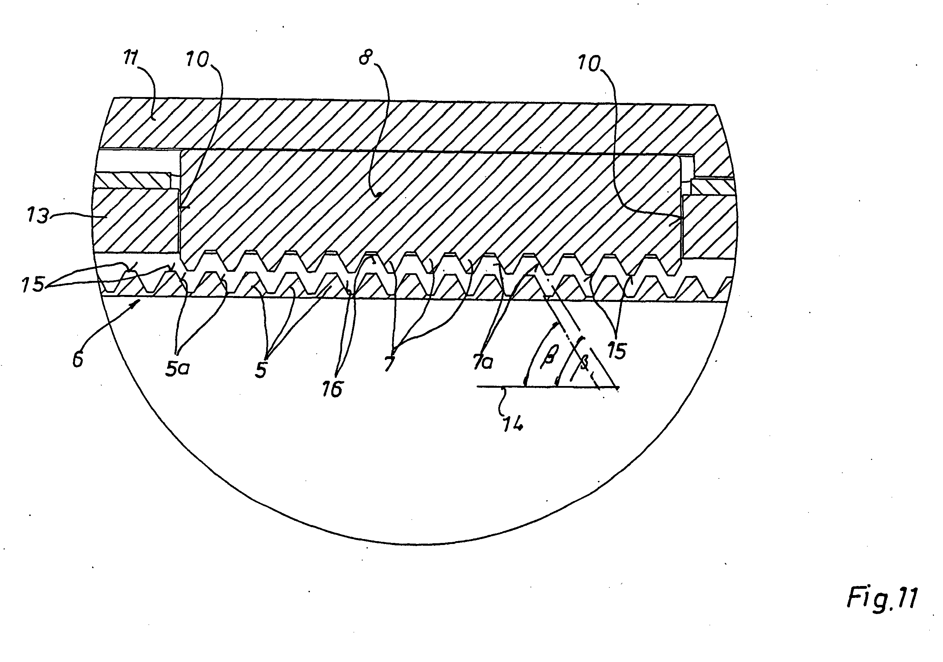

Die Zähne 5 der Zahnleiste 6 und die Gegenzähne 7 in der Zahnstange 8 sind etwa gleich groß. Weiterhin sind die Zähne 5, 7 in der Zahnleiste 6 und in der Zahnstange 8 mit einer Geradverzahnung versehen, d. h. die Zähne 5 und die Zähne 7 verlaufen in einer Geraden. Weiterhin sind die Zähne mit ebenen Flanken 5a, 7a versehen, die zu einer Horizontalen 14 unter einem Winkel a zwischen 30° und 90°, im vorliegenden Fall gemäß den Figuren 10 und 11 unter 60° verlaufen. Die Zahnflanken 5a, 7a sind am Kopf 15 der Zähne 5, 7 über eine radiale Abrundung oder eine ebene Abflachung miteinander verbunden.

Wie am anschaulichsten aus den Figuren 2 und 4 entnommen werden kann, sind die Zähne 5, 7 über ihre Breite B an der Zahnstange 8 bzw. der Zahnleiste 6 an ihren freien Enden konvex und die Zahnfüße 16 der Zähne 5 in der Zahnleiste 6 über ihre Breite B konkav abgerundet. Dies ist kein Widerspruch mit dem vorgenannten Merkmal, daß sich die Flanken 5a und 7a am Kopf der Zähne 5, 7 über eine radiale Abrundung bzw. Abflachung 15 miteinander verbunden sind, weil diese Verbindung in axialer, hingegen die Abrundung der Zähne 5, 7 der zu den Figuren 2 und 4 beschriebenen Weise in radialer Richtung erstreckt.

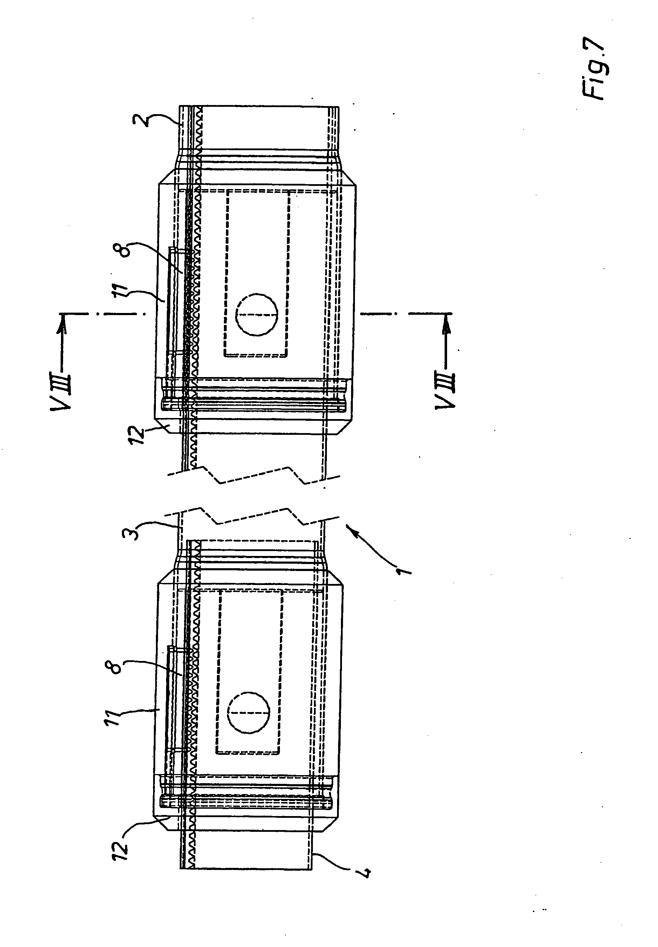

Wie aus den Figuren 1, 3, 5 und 7 entnommen werden kann, weist der Drehschieber 11 eine zylindrische Außenumfangsform auf, die beidendig in gefälliger Form abgeschrägt bzw. abgerundet ist.

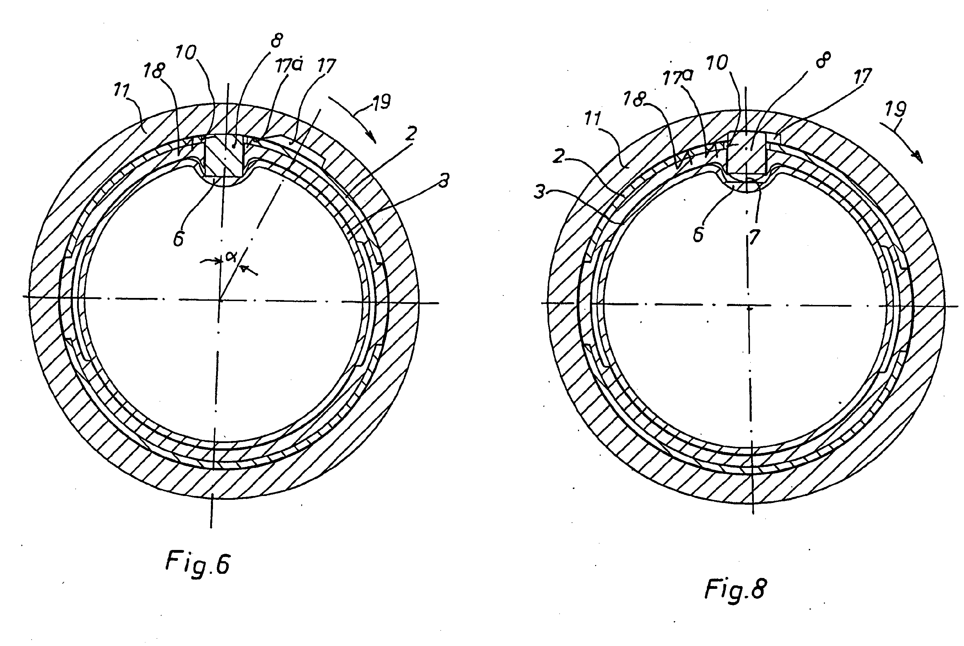

Wie am anschaulichsten den Figuren 6 und 8 entnommen werden kann, ist der Drehschieber 11 auf seiner Innenumfangsfläche in einem Bereich mit einer Ausnehmung 17 versehen, die der Breite B und der Länge L der darin in der Entriegelungsposition hineinragenden Zahnstange 8 entspricht. Bei einer ovalen oder elliptischen Ausbildung der Zahnstange 8 und der Öffnung 10 liegen die Hauptachsen und die Nebenachsen der Ellipsen etwa in derselben Ebene und sind etwa unter Berücksichtigung eines geringen Spiels gleich lang.

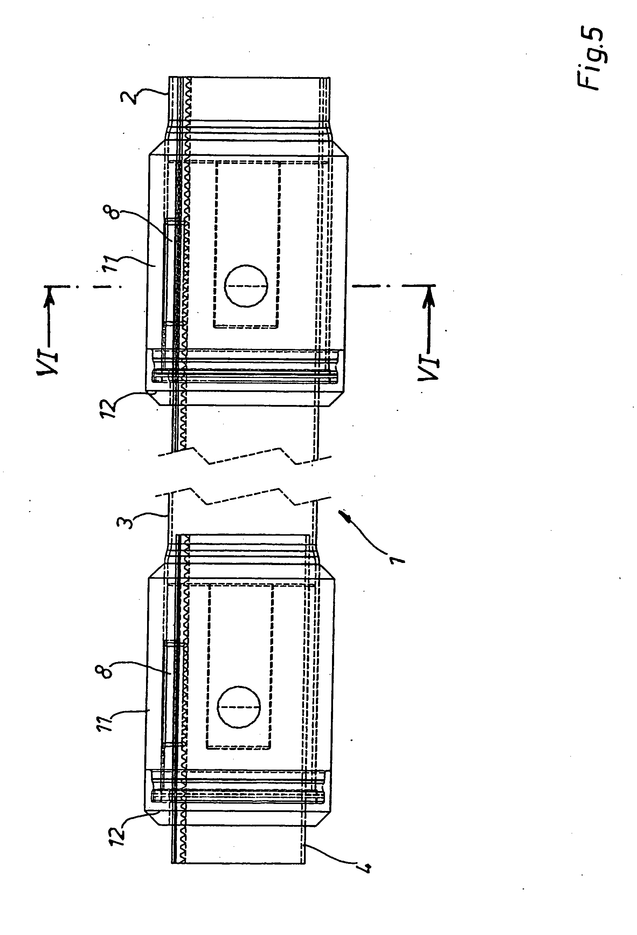

Wie am anschaulichsten den Schnittansichten der Figuren 6 und 8 entnehmbar ist, erstreckt sich auf mindestens einer Seite, vorliegend auf der linken Seite der Ausnehmung 17 des Drehschiebers 11 ein sich kontinuierlich verengender Innenumfangsbereich 18, der zur Erreichung der Verriegelungsposition und bei einer Drehung des Drehschiebers 11 in Richtung des Pfeiles 19 die Zahnstange 8 mit ihren Zähnen 7 in die Zahnfüße 16 zwischen die Zähne 5 der Zahnleiste 6 preßt. Dadurch wird die in den Figuren 1 und 2 sowie in den Figuren 5 und 6 dargestellte Verriegelungsposition erreicht. In dieser Verriegelungsposition ist das Außenrohr 2 und das erste Innenrohr 3 nicht mehr zueinander relativ verschieblich. Das gleich gilt für das als Außenrohr fungierende erste Innenrohr 3 in Bezug auf das zweite Innenrohr 4. Auch diese beiden Rohre sind in den Figuren 1, 2, 5 und 6 in ihren Verriegelungspositionen dargestellt.

Um von der Entriegelungsposition gemäß Fig. 8 in die Verriegelungsposition gemäß Fig. 6 zu gelangen, muß der Drehschieber 11 nur um einen geringfügigen Winkel α in Richtung des Pfeiles 19 im Uhrzeigersinn verdreht werden. Sobald der sich kontinuierlich verengende Innenumfangsbereich 18 des Drehschiebers 11 die Klemmposition der Zahnstange 8 gemäß Fig. 6 bewirkt hat, ist die Verriegelungsposition erreicht. Zur Entriegelung wird der Drehschieber 11 im Gegenuhrzeigersinn bzw. in Gegenrichtung des Pfeiles 19 aus der Position der Fig. 6 in die Position der Fig. 8 in der Zeichenebene nach links verschwenkt bis die Zahnstange 8 wieder in die Ausnehmung 17 ausweichen kann.

In diesen Entriegelungspositionen der Figuren 3, 4, 7 und 8 kann das Außenrohr 2 zum ersten Innenrohr 3 in beiden Richtungen des Doppelpfeiles 20 relativ verschoben werden. Die Verschiebekraft der Bedienungsperson bewirkt sodann, daß die Zähne 5 der Zahnleiste 6 an ihren Zahnflanken 5a die Zahnflanken 7a der Gegenzähne 7 in der Zahnstange 8 keilförmig über einen Winkel β von beispielsweise 60° nach oben schieben. Die Gegenzähne 7 der Zahnstange 8 "hoppeln" solange über die Zähne 5 der Zahnleiste 6, bis die gewünschte Teleskopauszugs- oder Einschublänge erreicht ist. Sodann genügt erneut eine Drehung des Drehschiebers 11 gemäß Fig. 8 in Richtung des Pfeiles 9 um den Winkel α, bis die Verriegelungsposition gemäß Fig. 6 erreicht ist. Da der Winkel α nur sehr klein ist, vorliegend zwischen 10° und 20° liegt, wird die Verriegelungsposition in Sekundenschnelle durch einen einzigen Handgriff erreicht.

Wie am anschaulichsten aus den Ausschnittsvergrößerungen der Figuren 10 und 11 hervorgeht sind die Flanken 5a in der Zahnleiste 6 sowie die Flanken 7a der Gegenzähne 7 in der Zahnstange 8 gerade gestaltet, d. h. sie verlaufen in einer Ebene. Diese Ebene der Zahnflanken 5a, 7a verläuft zu einer Horizontalen 14 unter einem Winkel β so wie er in den Figuren 10 und 11 eingezeichnet ist. Sowohl die Zähne 5 in der Zahnleiste 6 als auch die Gegenzähne 7 in der Zahnstange 8 sind an ihren Köpfen 15 mit Abflachungen versehen, die in entsprechende Abflachungen in den Zahnfüßen 16 eingreifen. Durch diese Form der Zahnköpfe 15 sowie der Zahnfüße 16 werden Beschädigungen der Zähne beim Teleskopiervorgang unterbunden, wenn beispielsweise die Gegenzähne 7 der Zahnstange 8 während des Verschiebevorganges über die Zähne 5 der Zahnleiste 6 "hoppeln".

Die Rohre 2, 3 und 4 sind vorteilhaft aus Aluminium hergestellt, wohingegen der Drehschieber 11 mit seinem Stirnring 12 sowie die Dicht- bzw. Führungshülse 13 ebenso wie die Zahnstange 8 aus Polyamid bestehen. Für den Drehschieber 11 und für den Stirnring 12 sowie die Dicht- bzw. Führungshülse 13 kommt auch POM und PE in Betracht. Dabei bildet die Dicht- bzw. Führungshülse 13 in Bezug auf den erweiterten Bereich 2a des Außenrohres 2 zugleich ein diesen Endbereich verstärkendes Korsett. Die Rohre 2, 3, 4 weisen unterschiedliche Durchmesser auf: so kann beispielsweise das zweite Innenrohr 4 einen Außendurchmesser von 32 mm, das erste Innenrohr 3 einen Außendurchmesser von 35 mm und das Außenrohr 2 einen Außendurchmesser von 38 mm aufweisen. Die Wanddicke der Rohre kann mit 0,8 mm bemessen werden. Eine solche Dicke reicht völlig aus, um eine stabile Zahnleiste 6 in das jeweilige Innenrohr 3, 4 einprägen zu können.

### Bezugszeichenliste

- Rohrverbindung: 1
- Außenrohr: 2
- Endbereich des Außenrohres 2: 2a
- erstes Innenrohr: 3
- Endbereiche des ersten Innenrohres 3: 3a
- zweites Innenrohr: 4
- Endbereich des Kabelkanals 4: 4a
- Zähne: 5, 7
- Zahnflanken der Zähne 5, 7: 5a, 7a
- Zahnleiste: 6
- Zahnstange: 8
- Doppelpfeile: 9, 20
- Öffnung: 10
- Drehschieber: 11
- Ende des Drehschiebers 11: 11a
- Stirnhülse: 12
- Dichtungshülse: 13
- Horizontale: 14
- Zahnköpfe: 15
- Zahnfüße der Zähne 5, 7: 16
- Ausnehmung: 17
- Innenumfangsbereich: 18
- Pfeile: 19
- Breite von Zahnstange 8 und Ausnehmung 17: B
- Länge von Zahnstange 8 und Ausnehmung 17: L
- Außendurchmesser der Rohre 2, 3, 4: D
- Winkel: α, β

## Patentansprüche

1. Teleskopierbare Rohrverbindung für Staubsauger-Saugrohre oder Stative mit mindestens einem Außenrohr und mit mindestens einem Innenrohr mit Rastvertiefungen, in welche ein das Außenrohr kuppelndes sowie über einen daran befestigten, manuell betätigbaren Schieber (11) sperrbares und entsperrbares Rastelement durch eine Öffnung im Außenrohr eingreift, wobei
die Rastvertiefung im Innenrohr (3) aus einem mit einer Vielzahl von Zähnen (5) versehenen, auf der Außenumfangsfläche des Innenrohrs (3) eingeprägten Zahnleiste (6) und das Rastelement aus einer kurzen Zahnstange (8) mit Gegenzähnen (7) besteht, die in der Verriegelungsposition von dem als Drehschieber (11) ausgebildeten Schieber mit einem kraft- und formschlüssigen Kontakt in die Zahnleiste (6) gepresst ist, **dadurch gekennzeichnet, dass** die Zahnstange (8) zur Erreichung der Öffnungsposition nach einer geringflügigen Drehung um einen Winkel (α) des Drehschiebers (11) unter der Wirkung der die Rohre (2, 3) relativ zueinander verschiebenden Kraft der Bedienperson von der Zahnleiste (6) in einen Rücksprung (17) auf einem Innenumfangsbereich (18) des Drehschiebers (11) zurückzudrücken ist, wobei die Zähne (5) der Zahnleiste (6) an ihren Zahnflanken (5a) die Zahnflanken (7a) der Gegenzähne (7) in der Zahnstange (8) keilförmig über einen Winkel (β) nach oben schieben.

2. Teleskopierbare Rohrverbindung nach Anspruch 1, **dadurch gekennzeichnet, daß** in einem jeweils im Querschnitt erweiterten Endbereich (3a) des von dem Außenrohr (2) abgewandten Ende des Innenrohres (3) ein zweiter Drehschieber (11) auf dem Innenrohr (3) angeordnet ist, das mit einem in das erste Innenrohr (3) teleskopierenden zweiten Innenrohr (4), einer zweiten Zahnleiste (6) und einer zweiten Zahnstange (8) zusammenwirkt.

3. Teleskopierbare Rohrverbindung nach Anspruch 1 oder 2, **dadurch gekennzeichnet, daß** die Zähne (5, 7) in der Zahnleiste (6) und in der Zahnstange (8) gleich groß sind.

4. Teleskopierbare Rohrverbindung nach einem der Ansprüche 1 bis 3, **dadurch gekennzeichnet, daß** die Zähne (5, 7) in der Zahnleiste (6) und in der Zahnstange (8) eine Geradverzahnung aufweisen.

5. Teleskopierbare Rohrverbindung nach einem der Ansprüche 1 bis 4, **dadurch gekennzeichnet, daß** die Zähne (5, 7) mit geraden Flanken (5a, 7a) versehen sind, die zu einer Horizontalen (14) unter einem Winkel (α) zwischen 30° und 90°, vorzugsweise von 60° bis 90° verlaufen.

6. Teleskopierbare Rohrverbindung nach einem der Ansprüche 1 bis 5, **dadurch gekennzeichnet, daß** die Zahnflanken (5a, 7a) am Kopf der Zähne (5, 7) über eine radikale Abrundung oder eine ebene Abflachung (15) miteinander verbunden sind.

7. Teleskopierbare Rohrverbindung nach einem der Ansprüche 1 bis 6, **dadurch gekennzeichnet, daß** die Zähne (7) über die Breite (B) der Zahnstange (8) an ihren freien Enden konvex und die Zahnfüße (16) der Zähne (5) in der Zahnleiste (6) über ihre Breite (B) konkav abgerundet sind.

8. Teleskopierbare Rohrverbindung nach einem der Ansprüche 1 bis 7, **dadurch gekennzeichnet, daß** der erste und zweite Drehschieber (11) eine zylindrische Außenumfangsform aufweist.

9. Teleskopierbare Rohrverbindung nach einem der Ansprüche 1 bis 8, **dadurch gekennzeichnet, daß** jeder Drehschieber (11) auf seiner Innenumfangsfläche mit einer Ausnehmung (17) versehen ist, die der Breite (B) und Länge (L) der darin in der Öffnungsposition hineinragenden Zahnstange (8) entspricht und an mindestens einer Seite (17a) der Ausnehmung (17) mit einem sich kontinuierlich verengenden Innenumfangsbereich (18) versehen ist, der zur Erreichung der Verriegelungsposition und bei Drehung des Drehschiebers (11) die Zahnstange (8) mit ihren Gegenzähnen (7) in die Zahnlücken zwischen den Zähnen (5) der Zahnleiste (6) preßt.

10. Teleskopierbare Rohrverbindung nach einem der Ansprüche 1 bis 9, **dadurch gekennzeichnet, daß** die Zahnstange (8) in senkrechter Projektionsansicht eine rechteckige Form (B, L) aufweist, die durch eine etwa gleich große Rechtecköffnung (10) im Außenrohr (2) mit geringfügigem Spiel hindurchgreift.

11. Teleskopierbare Rohrverbindung nach einem der Ansprüche 1 bis 10, **dadurch gekennzeichnet, daß** zwischen der Innenumfangsfläche des jeweiligen Außenrohres (2, 3) und der Außenumfangsfläche des jeweiligen Innenrohres (3 oder 4) eine Dicht- bzw. Führungshülse (13) in einem erweiterten Endbereich (2a oder 3a) angeordnet ist.

12. Teleskopierbare Rohrverbindung nach einem der Ansprüche 1 bis 11, **dadurch gekennzeichnet, daß** jeder Drehschieber (11) mit einem aufzuklipsenden Stirnring (12) am erweiterten Endbereich (2a oder 3a) festgesetzt ist.

13. Teleskopierbare Rohrverbindung nach einem der Ansprüche 1 bis 10, **dadurch gekennzeichnet, daß** sämtliche Rohre (2, 3, 4) aus Aluminium hergestellt sind und der Drehschieber (11), die Dicht- bzw. Führungshülse (13) und der Stirnring (12) sowie die Zahnstange (8) aus Polyamid, POM oder PE bestehen.

14. Teleskopierbare Rohrverbindung nach einem der Ansprüche 1 bis 11, **dadurch gekennzeichnet, daß** die Rohre (2, 3, 4) eine Wanddicke von ca. 0,8 mm und einen Außendurchmesser (D) von 32 mm bis 38 mm aufweisen.

## Claims

1. Telescopic tube joint for vacuum cleaner suction tubes or for tripods having at least one outer tube and at least one inner tube having catch recesses in which a catch element coupling the outer tube as well as being lockable or unlockable via a manually actuated slider (11) attached thereto is engaged through an opening in the outer tube, wherein the catch recesses in the inner tube (3) consist of a tooth strip (6) provided with a plurality of teeth (5), imprinted on the outer peripheral surface of the inner tube (3) and the catch element consists of a short toothed rack (8) having opposing teeth (7), which is pressed into force- and form-fit contact with the toothed strip (6) by the rotary slide (11) in the locked position,
**characterized in**
**that** in order to reach the open position, the toothed rack (8) can be pushed back after a slight turn to an angle (α) of the rotary slide (11) under exertion of force of the operator sliding the tubes (2, 3) relative to one another by the toothed strip (6) into a rebound (17) on an inner peripheral area (18) of the rotary slide (11), wherein the tooth flanks (5a) of the teeth (5) of the toothed strip (6) push the tooth flanks (7a) of the opposing teeth (7) in the toothed rack (8) upward in a wedged manner at an angle (β).

2. Telescopic tube joint according to claim 1 **characterized in that** on an cross-section expanded end of the inner tube (3) that is averted to the respective outer tube (2), a second rotary slide (11) is arranged on the inner tube (3), which interacts with one second inner tube (4) sliding in the first inner tube (3), a second toothed strip (6) and a second toothed rack (8).

3. Telescopic tube joint according to claim 1 or 2, **characterized in that** the teeth (5, 7) in the toothed strip (6) and the toothed rack (8) are of the same size.

4. Telescopic tube joint according to any one of claims 1 to 3, **characterized in that** the teeth (5, 7) in the toothed strip (6) and the toothed rack (8) have straight toothing.

5. Telescopic tube joint according to any one of claims 1 to 4, **characterized in that** the teeth (5, 7) are provided with even tooth flanks (5a, 7a) that run at an angle (α) of between 30° and 90°, preferably 60° to 90° to a horizontal (14).

6. Telescopic tube joint according to any one of claims 1 to 5, **characterized in that** the tooth flanks (5a, 7a) are connected to one another via a radial rounding or an even flattening (15).

7. Telescopic tube joint according to any one of claims 1 to 6, **characterized in that** the teeth (7) are convexly rounded on their free ends over the width (B) of the toothed rack (8) and the bases (16) of the teeth (5) in the toothed strip (6) are concavely rounded over their width (B).

8. Telescopic tube joint according to any one of claims 1 to 7, **characterized in that** the first and the second rotary slide (11) have a cylindrical outer peripheral form.

9. Telescopic tube joint according to any one of claims 1 to 8, **characterized in that** each rotary slide (11) is provided with a recess (17) on its inner peripheral surface, which corresponds to the width (B) and length (L) of the toothed rack (8) extending into the opening position and is provided on at least one side (17a) of the recess (17) with a continuously narrowing inner peripheral surface (18), which, to reach the locked position and by turning the rotary slide (11), presses the toothed rack (8) with its opposing teeth (7) into the spaces between the teeth (5) of the toothed strip (6).

10. Telescopic tube joint according to any one of claims 1 to 9, **characterized in that** the toothed rack (8) has a rectangular shape (B, L) in the vertical positional view, which reaches with slight tolerance through a square opening (10) of the same size in the outer tube (2).

11. Telescopic tube joint according to any one of claims 1 to 10, **characterized in that** a sealing or, respectively, guiding sleeve (13) is arranged between the inner peripheral surface of the respective outer tube (2, 3) and the outer peripheral surface of the respective inner tube (3 or 4) in an expanded end area (2a or 3a).

12. Telescopic tube joint according to any one of claims 1 to 11, **characterized in that** each rotary slide (11) is set with a clipped-on front ring (12) on the expanded end area (2a or 3a).

13. Telescopic tube joint according to any one of claims 1 to 10, **characterized in that** all tubes (2, 3, 4) are made of aluminum and the rotary slide (11), the sealing or, respectively, guiding sleeve (13) and the front ring (12) as well as the toothed rack (8) consist of POM or PE.

14. Telescopic tube joint according to any one of claims 1 to 11, **characterized in that** the tubes (2, 3, 4) have a wall thickness of 0.8 mm and an outer diameter (D) of 32 mm to 38 mm.

## Revendications

1. Raccord de tuyau télescopique pour tuyaux d'aspiration ou manches d'aspirateurs, comprenant au moins un tuyau extérieur et comprenant au moins un tuyau intérieur pourvu de cavités d'encliquetage dans lesquelles vient en prise, à travers une ouverture dans le tuyau extérieur, un élément d'encliquetage réalisant l'accouplement avec le tuyau extérieur et pouvant être verrouillé et déverrouillé par le biais d'un coulisseau (11) qui peut être actionné manuellement et qui y est fixé,
la cavité d'encliquetage dans le tuyau intérieur (3) étant constituée d'une baguette dentée (6) pourvue d'une pluralité de dents (5) et estampée sur la surface périphérique extérieure du tuyau intérieur (3), et l'élément d'encliquetage étant constitué d'une courte tige dentée (8) pourvue de dents complémentaires (7), laquelle tige dentée est pressée dans la baguette dentée (6) par contact à force et par complémentarité de forme dans la position de verrouillage par le coulisseau réalisé sous forme de coulisseau rotatif (11),
**caractérisé en ce que**,
pour atteindre la position d'ouverture, la tige dentée (8) doit, après une légère rotation d'un angle (α) du coulisseau rotatif (11) sous l'effet de la force de l'opérateur qui déplace les tuyaux (2, 3) l'un par rapport à l'autre, être repoussée par la baguette dentée (6) dans un renfoncement (17) sur une région périphérique intérieure (18) du coulisseau rotatif (11), les dents (5) de la baguette dentée (6), au niveau de leurs flancs de dent (5a), poussant, vers le haut et à la manière d'un coin sur un angle β) , les flancs de dent (7a) des dents complémentaires (7) dans la tige dentée (8).

2. Raccord de tuyau télescopique selon la revendication 1, **caractérisé en ce qu'**un deuxième coulisseau rotatif (11) est disposé sur le tuyau intérieur (3) dans une région d'extrémité (3a) respective, élargie en section transversale, de l'extrémité du tuyau intérieur (3) opposée au tuyau extérieur (2), lequel deuxième coulisseau rotatif coopère avec un deuxième tuyau intérieur (4) se déplaçant de manière télescopique dans le premier tuyau intérieur (3), avec une deuxième baguette dentée (6) et avec une deuxième tige dentée (8).

3. Raccord de tuyau télescopique selon la revendication 1 ou 2, **caractérisé en ce que** les dents (5, 7) dans la baguette dentée (6) et dans la tige dentée (8) sont de même taille.

4. Raccord de tuyau télescopique selon l'une quelconque des revendications 1 à 3, **caractérisé en ce que** les dents (5, 7) dans la baguette dentée (6) et dans la tige dentée (8) présentent une denture droite.

5. Raccord de tuyau télescopique selon l'une quelconque des revendications 1 à 4, **caractérisé en ce que** les dents (5, 7) sont pourvues de flancs droits (5a, 7a) qui s'étendent suivant un angle (α) entre 30° et 90°, de préférence de 60° à 90°, par rapport à l'horizontale (14).

6. Raccord de tuyau télescopique selon l'une quelconque des revendications 1 à 5, **caractérisé en ce que** les flancs de dent (5a, 7a) sont reliés les uns aux autres par le biais d'un arrondi radial ou d'un aplatissement plan (15) au niveau de la tête des dents (5, 7).

7. Raccord de tuyau télescopique selon l'une quelconque des revendications 1 à 6, **caractérisé en ce que** les dents (7) sont convexes à leurs extrémités libres sur la largeur (B) de la tige dentée (8) et les pieds de dent (16) des dents (5) dans la baguette dentée (6) sont arrondis de manière concave sur sa largeur (B).

8. Raccord de tuyau télescopique selon l'une quelconque des revendications 1 à 7, **caractérisé en ce que** le premier et le deuxième coulisseau rotatif (11) présentent une forme périphérique extérieure cylindrique.

9. Raccord de tuyau télescopique selon l'une quelconque des revendications 1 à 8, **caractérisé en ce que** chaque coulisseau rotatif (11) est pourvu, sur sa surface périphérique intérieure, d'un évidement (17) qui correspond à la largeur (B) et à la longueur (L) de la tige dentée (8) qui pénètre dans celui-ci dans la position d'ouverture et est pourvu, sur au moins un côté (17a) de l'évidement (17), d'une région périphérique intérieure (18) se rétrécissant de manière continue, laquelle presse la tige dentée (8) avec ses dents complémentaires (7) dans les entredents entre les dents (5) de la baguette dentée (6), pour atteindre la position de verrouillage et en cas de rotation du coulisseau rotatif (11).

10. Raccord de tuyau télescopique selon l'une quelconque des revendications 1 à 9, **caractérisé en ce que** la tige dentée (8) présente, en projection verticale, une forme rectangulaire (B, L) qui vient en prise avec un faible jeu à travers une ouverture rectangulaire (10) environ de même taille dans le tuyau extérieur (2).

11. Raccord de tuyau télescopique selon l'une quelconque des revendications 1 à 10, **caractérisé en ce qu'**une douille d'étanchéité ou de guidage (13) est disposée dans une région d'extrémité élargie (2a ou 3a), entre la surface périphérique intérieure du tuyau extérieur (2, 3) respectif et la surface périphérique extérieure du tuyau intérieur (3 ou 4) respectif.

12. Raccord de tuyau télescopique selon l'une quelconque des revendications 1 à 11, **caractérisé en ce que** chaque coulisseau rotatif (11) est fixé sur la région d'extrémité élargie (2a ou 3a) à l'aide d'une bague frontale (12) à enclipser.

13. Raccord de tuyau télescopique selon l'une quelconque des revendications 1 à 10, **caractérisé en ce que** tous les tuyaux (2, 3, 4) sont fabriqués en aluminium et le coulisseau rotatif (11), la douille d'étanchéité ou de guidage (13) et la bague frontale (12) ainsi que la tige dentée (8) sont constitués de polyamide, de polyoxyméthylène ou de polyéthylène.

14. Raccord de tuyau télescopique selon l'une quelconque des revendications 1 à 11, **caractérisé en ce que** les tubes (2, 3, 4) présentent une épaisseur de paroi d'environ 0,8 mm et un diamètre extérieur (D) de 32 mm à 38 mm.
